# EUROPEAN PATENT APPLICATION

(11) **EP 3 640 520 A1**
(43) Date of publication of application: **22.04.2020**
(21) Application number: 18818362.8
(22) Date of filing: 17.04.2018
(51) Int. Cl.: F16M 11/14, F16B 7/04, F16B 7/14

(54) **BEARING FIXTURE**

(30) Priority: 16.06.2017 JP 2017118334
(71) Applicant: Sugatsune Kogyo Co., Ltd., Tokyo 101-8633 (JP)
(72) Inventor: KIKUCHI, Atsushi, Tokyo 101-8633 (JP); ISHII, Hiroyuki, Tokyo 101-8633 (JP); YAMAGUCHI, Koushi, Tokyo 101-8633 (JP)
(74) Representative: Zoli, Filippo
(86) International application number: PCT/JP2018/015817
(87) International publication number: WO 2018/230143

(57) **Abstract**

To provide a support device being capable of inserting an engagement part to a recess of a supporting member from a front of the supporting member. The support device (1) comprises a support device body (3) and a fixture means (8) for fixing the support device body (3) to the supporting member (2). The support device body (3) includes an engagement part (4) being fitted into a recess (6) of the supporting member (2) slidably along to an up-and-down direction and a receiver mount (5) protruding from the recess (6) of the supporting member (2) while being capable of sliding along to an up-and-down direction together with the engagement part (4). The engagement part (4) is capable of changing from an insertable state being narrower than an opening width of the recess (6) to a no going-off state being wider than the opening width of the recess (6).

## Description

### FIELD OF INVENTION

The present invention relates to a support device attached to a support member with adjustable height.

### BACKGROUND OF INVENTION

A support device attached to a support member with adjustable height has been known (refer to Patent Literature 1). To the support device, a monitor, a shelf board, or the like is placed. By supporting an object through the support device by the support member, the height of the object may be easily adjusted.

The support member has a recess extending along to an up-and-down direction. The support device has an engagement part fitted slidably to the recess of the support member and a receiver mount protruding from the recess of the support member while being integrated with the engagement part. To prevent the engagement part from going-off, a width of engagement part is wider than an opening width of supporting member.

The support device is fixed to the supporting member by a fixture means. The fixture means has a lever operable by a user. When the user releases its hand from the lever, the engagement part presses an inner face of the recess to fix the support device to the support member. Furthermore, when the user pushes the lever, pressurization of the engagement part is released to make the support device move along to an up-and-down direction.

### PRIOR ART LITERATURE

### Patent Literature 1

Patent Literature 1: Japanese Patent (examined) Publication Heisei No. 1-14446

### SUMMARY OF INVENTION

### PROBLEM TO BE SOLVED BY INVENTION

In a conventional support device, since a width of engagement part of a support device is wider than an opening width of a recess of the support device and thus, the engagement part must be inserted to the recess from an end of a longitudinal direction of the support member such that there has been a problem that the engagement part is hard to insert to the recess.

Thus, an object of the present invention is to provide the support device allowing insertion of an engagement part to the recess of the support member from a front side of the support member.

### MEANS FOR SOLVING PROBLEM

For solving the above problem, an embodiment of the resent invention is a support device comprising a support device body including an engagement part, the engagement part being fitted slidably into a recess extending to an up-and-down direction of a supporting member, the engagement part being capable of changing from an insertable state being narrower than an opening width of the recess to a no going-off state being wider than the opening width of the recess and a receiver mount protruding from the recess of the supporting member and being slidable along to an up-and-down direction together with the engagement part, and a fixture means, the fixture means fixing the support device body to the supporting member.

### ADVANTAGEOUS EFFECT OF INVENTION

According to the present invention, an engagement part of a support device can be inserted to a recess of a support member from a front side of the support member.

### BRIEF DESCRIPTION OF DRAWINGS

[Fig. 1] is a perspective view of a support device 1 of a first embodiment of the present invention.
[Fig. 2] is a plane view of a support device of the embodiment.
[Fig. 3] is an exploded perspective view of the embodiment.
[Fig. 4] is a perspective view of an example mounting a monitor to a support device of the embodiment.
[Fig. 5] is a perspective view of a support device of the embodiment (Fig. 5(a) shows a guiding recess of a first divided part and Fig 5(b) shows an elongated vertical ridge of a second divided part.
[Fig. 6] is a vertical cross section of a support device of the embodiment (Fig. 6(a) shows a state releasing a hand from a lever and Fig. 6(b) shows a state pushing the lever).
[Fig. 7] is a process chart of a method for assembling an engagement part of a support device of the embodiment.
[Fig. 8] is a perspective view of a second embodiment of a support device pf the present invention.
[Fig. 9] is an exploded perspective view of a support device of the embodiment.
[Fig. 10] is a process chart illustrating an insertion method of a support device of the embodiment to an engagement part.

Hereinbelow, an embodiment of a support device of the present invention will be described in detail based on attached drawings. However, the support device of the present invention can be practiced in various forms and therefore, must not be limited to embodiments described in the present description. The present embodiments aim to make disclosures of description sufficiently and are provided under an intention for making those skilled in the art understood scope of the present invention sufficiently.

### (First Embodiment)

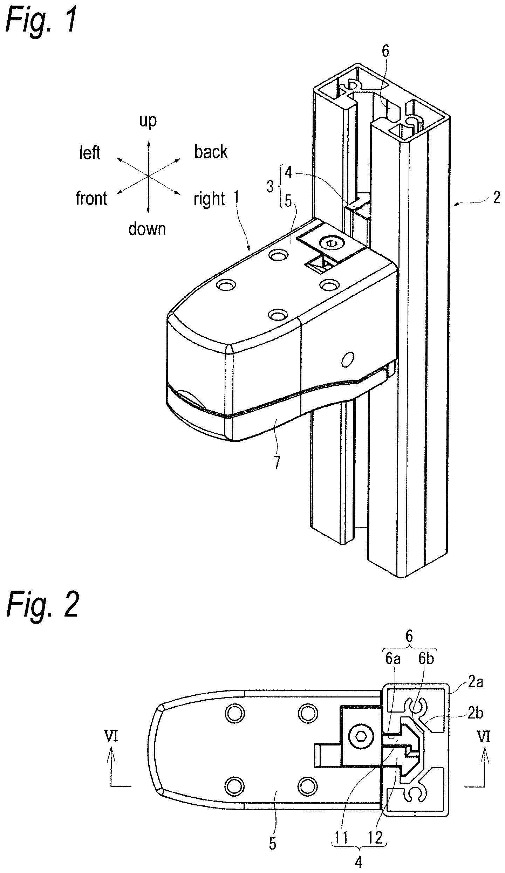

Fig. 1 shows a support device 1 of a first embodiment of the present invention. The support device 1 is fixed to a supporting post 2 as a support member. 4 is an engagement part engaged into a recess 6 of the supporting post 2; 5 is a receiver mount protruding from the recess 6 of the supporting post 2 and 7 is a cover covering a lower part of the receiver mount 5. The engagement part 4 and the receiver mount 5 configure a support device body 3. The support device 1 is fixed to the supporting post 2 with adjustable height. The support device 1 of which height is adjusted to a given height is fixed to the supporting post 2 by a fixture means. Although details will be described later, a lever operable by a user is received within the receiver mount 5. By operating the lever, states are switched between the fixed state where the receiver part 1 is fixed to the supporting post 2 and the movable state along to an up-and-down direction.

Now, hereunder for convenience of descriptions, using the directions when assuming that the supporting post 2 is viewed from the front side, i.e., a front-and-back direction, a left-and-right direction and an up-and-down direction, the configuration of the support device 1 will be described. Of course, an arrangement of the support device 1 should not be limited to such arrangements.

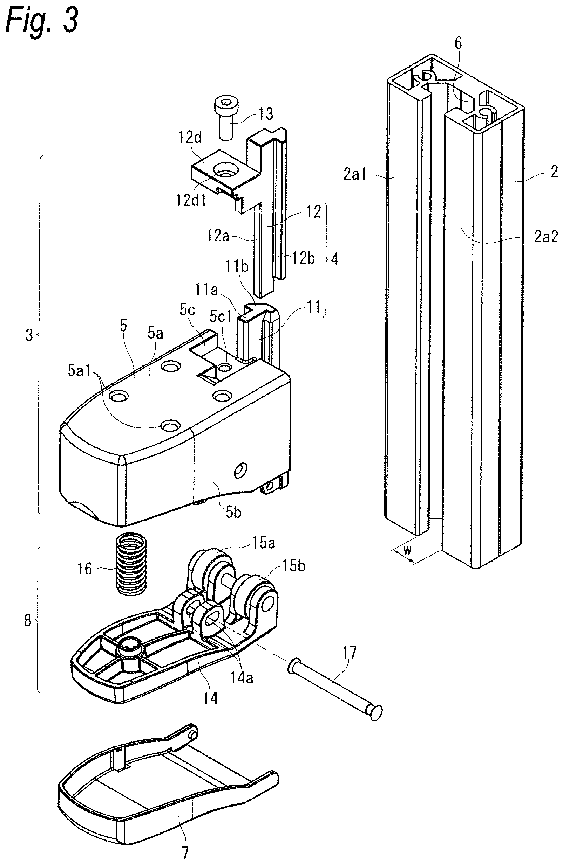

The supporting post 2 is as its whole body a long-sized material continuing up-and-down while being provided with the recess 6 of a concave form in the center of the front along to the up-and-down direction. As shown in Fig. 2, the supporting post 2, in its plane view, has an outer contour part 2a with an approximate rectangular shape and a continuous wall 2b formed integrally in the inside of the outer contour part 2a while having an approximate triangle shape. To the continuous wall 2b, the recess 6 having an approximate T-shape when viewed from the front is formed. That is, the recess 6 is formed to a dovetailed shape and the width along to the left-and-right direction at the bottom 6b of the recess 6 becomes wider than an opening width W of an entrance part 6a (refer to Fig. 3). To the supporting post 2, fixing holes (not shown) for fixing the supporting post 2 to a wall face are formed along to the up-and-down direction at a constant pitch.

Fig. 3 show an exploded perspective view of support device. The support device 1 has the support device body 3, the fixture means 8 for fixing the support device body 3 to the supporting post 2. The support device body 3 has the engagement part 4 and the receiver mount 5.

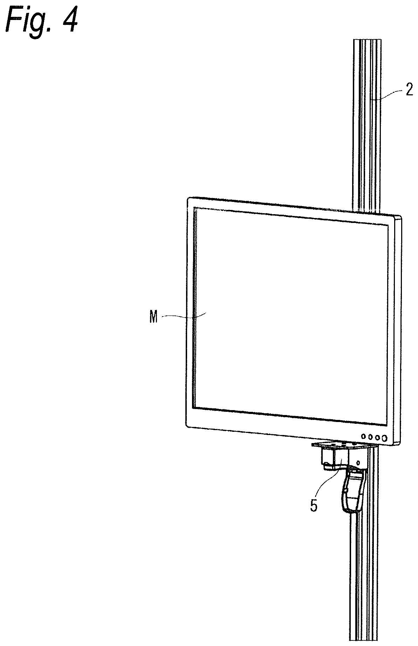

The receiver mount 5 protrudes outwardly from the recess 6 of the supporting post 2. The receiver mount 5 has a horizontal plate 5a for mounting an object, a lateral wall 5b extending downwardly and vertically from a periphery of the horizontal plate 5a. The horizontal plate 5a has an approximate quadrilateral shape with a slightly pointed toward the front in its plane view. On an upper face of the horizontal plate 5a, the object such as a monitor, a shelf board, or the like is placed. At the upper face of the horizontal plate 5a, screw holes 5a1 for fixing the object are formed. In Fig. 4, an example where the monitor M is fixed to the receiver mount 5 is illustrated.

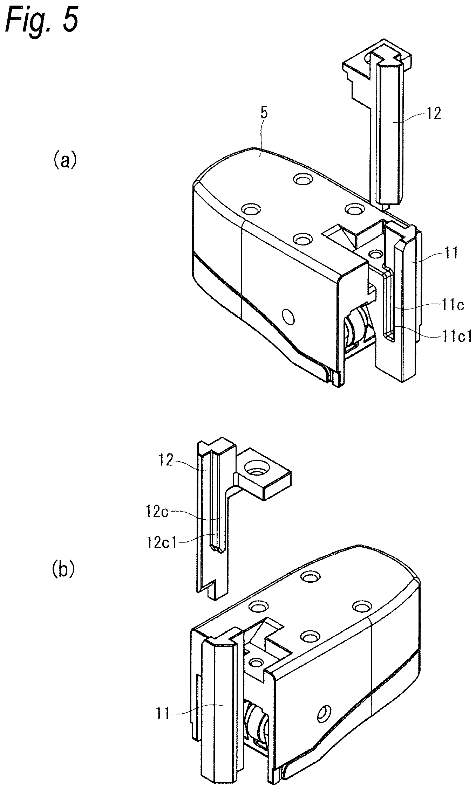

As shown in Fig. 2, the engagement part 4 has an approximately T-shape in its plane view. The engagement part 4 is divided right-and-left into two parts and has a first divided part integrated with the receiver mount 5 and a second divided part 12 fixed to the first divided part 11. The first divided part 11 has an approximately L-shape in its plane view and has a narrow width part 11a engaged into the entrance part 6a of the recess 6 in the supporting post 2 and a wide width part 11b vending outwardly from the narrow width part 11a while being engaged with the bottom 6b of the recess 6 (refer to Fig, 3). As shown in Fig. 3, the width along to the right-and-left direction of the wide width part 11b is narrower than the opening width W of the recess 6 such that the first divided part 11 can be inserted into the recess 6 from the front side of the supporting post 2. The first divided part 11 is longer than a height of the receiver mount 5 along to the up-and-down direction. As shown in Fig. 5(a), to an opposing face of the first divided part 11 opposing to the second divided part 12, a guiding recess 11c extending to the up-and-down direction is formed.

The second divided part 12 has an approximately L-shape in its plane view (refer to Fig. 2), likely to the first divided part 11, has a narrow width part 12a engaged into the entrance part 6a of the recess 6 in the supporting post 2 and a wide width part 12b vending outwardly from the narrow width part 12a while being engaged with the bottom 6b of the recess 6 (refer to Fig. 3). The second divided part 12 is longer than a height of the receiver mount 5 along to the up-and-down direction. As shown in Fig. 5(b), to an opposing face of the first divided part 12 opposing to the first divided part 11, an elongated vertical ridge 12c to be received in the guiding recess 11c of the first divided part 11 is formed. To the guiding recess 11a of the first divided part 11, the elongated vertical ridge 12c of the second divided part 12 is engaged. By abutting a lateral face 11c1 (refer to Fig. 5(a)) as an abutting face of the guiding recess 11c in the first divided part 11 to a lateral face 12c1 (refer to Fig. 5(b)) as an abutting face of the elongated vertical ridge 12c in the second divided part 12, backward movement, when viewed from the front, of the second divided part 12 is restricted with respect to the first divided part 11.

As shown in Fig, 3. to the second divided part 12, an operation piece 12d protruding from the recess 6 of the supporting post 2 and having a quadrilateral shape in its plane view is formed integrally. To the operation piece 12d, a through hole 12d1 for passing through a fastening member 13 such as a screw and the like is formed. To the receiver mount 5, a concave part 5c having a quadrilateral shape while engaging with the operation piece 12d is formed. To the concave part 5c, a screw hole 5c1 for screwing the fastening member 13 is formed. When the operation piece 12d of the second divided part 12 is engaged with the concave part 5c of the receiver mount 5, movement of the second divided part 12 toward a lower direction is restricted. The second divided part 12 is fixed to the receiver part 5 by the fastening member 13. Since the first divided part 11 is formed integrally with the receiver part 5, the second divided part 12 can be fixed to the first divided part 11. Under the condition where the second divided part 12 is fixed to the first divided part 11, the engagement part 4 is capable of sliding along to the up-and-down direction with respect to the supporting post 2.

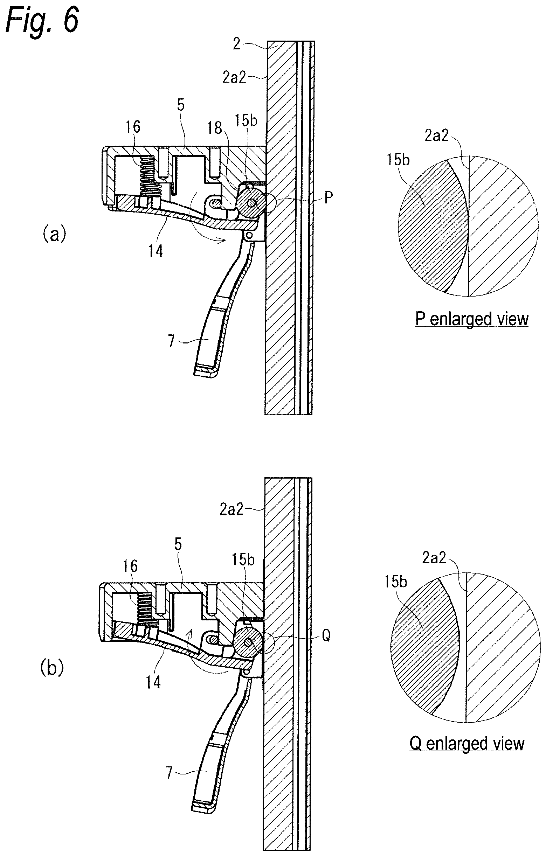

The fixture means 8 has a lever 14, stoppers 15a, 15b and a spring 16. The lever 14 has a flat-plate shape for allowing to engage with a lower part of the receiver mount 5. A center part along to a forward-and-back direction of the lever 14 is supported rotatably with the lateral wall 5b of the receiver mount 5 through a shaft 17. A shaft hole 14a of the lever 14 is a long hole. To a rear end of the lever 14, stoppers 15a, 15b of a right-and left pair are disposed. The stoppers 15a, 15b are consisted of rollers supported rotatably with the lever 14. Between the front end of the lever 14 and the receiver mount 5, a spring 16 is disposed for enforcing the lever 14 to a counterclockwise direction shown by an arrow of Fig. 6(a).

At the lower end part of the receiver mount 5, the cover 7 having a plate shape conformed to a lower part of the receiver mount 5 is supported rotatably. The lever 14 is received in the cover 7. The cover 7 is disposed to prevent a user from making actuate the lever 14 erroneously.

As shown in Fig. 6(a) to the receiver mount 5, slant faces 18 of a right-and left pair are formed opposing to opening edges 2a1, 2a2 of the right-and-left pair (refer to Fig. 3) in the supporting post 2. The slant faces 18 are formed such that a spacing to the opening edge 2a2 becomes the minimum width at the upper end and becomes the maximum width at the lower end. Between the slant face 18 and the opening edge 2a2, the stopper 15b is sandwiched.

As shown in Fig. 6(a), when a user releases its hand from the lever 14, due to the elastic force of the spring 16, the stopper 15b enters as a wedge between the slant face 18 and the opening edge 2a2 of the supporting post 2. The receiver mount 5 is push forward by the stopper 15b such that the engagement part 4 of the receiver part 5 is urged to an inner face of the recess 6 (refer to Fig. 2). Thus, the support device 1 can be fixed to the supporting post 2. When placing a heavy object on the receiver mount 5, the stopper 15b tries to move upwardly and relatively with respect to the slant face 18 such that the force pressing the inner face of the recess 6 by the engagement part 4 of the receiver mount 5 becomes large.

As shown in Fig. 6(b), when a user pushes the front-end part of the lever 14 upwardly against elastic force of the spring 16, the stopper 15b comes down due to a principle of a seesaw. Thus, between the stopper 15b and the opening edge 2a2 of the supporting post 2, a slight spacing is created such that the receiver mount 5 becomes slidable along to the up-and-down direction.

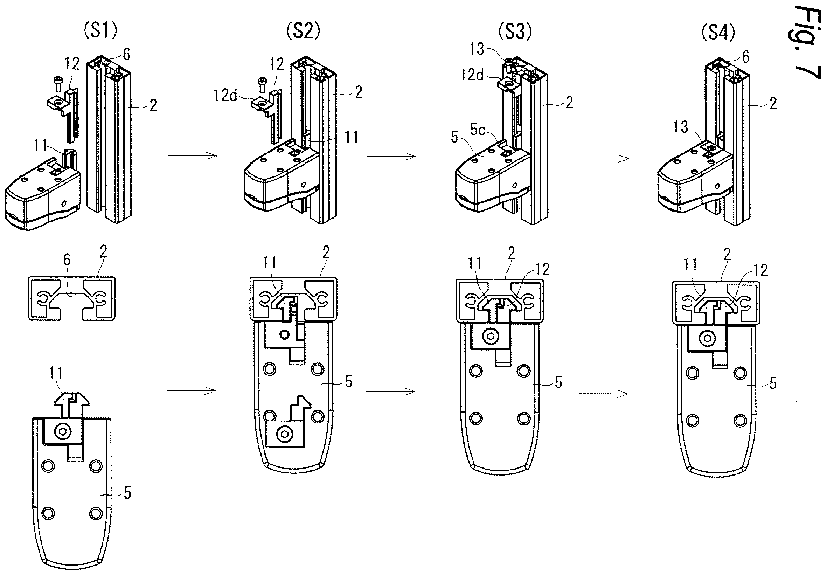

Fig. 7 shows a process chart for illustrating a method for assembling the engagement part 4 of the support device 1. In the drawing, an upper series shows perspective views and a lower series shows plane views. First, in the condition where the first divided part 11 and the second divided part 12 are separated, only the first divided part 11 is engaged with the recess 6 from the front side of the supporting post 2 (S1, S2). The right-and left width of the first divided part 11 is narrower than the opening width of the recess 6 such that the engagement part 4 is in an insertable state.

Next, the first divided part 11 is moved toward the right side of the recess 6 and the second divided part 12 shifted upwardly from the first divided part 11 is engaged with the recess 6 from the front side of the supporting post 2 (S2, S3). In this time, the operation piece 12d of the second divided part 12 is grasped to operate the second divided part 12 from the outside of the supporting post 2.

Next, the second divided part 12 is moved to the right side of the recess 6 and the second divided part 12 is made to move toward the downward direction (S3, S4). The elongated vertical ridge 12c of the second divided part 12 is engaged with the guiding recess 11c of the first divided part 11 (refer to Fig. 5), such that the movement of the second divided part 12 is guided. The second divided part 12 moves to the lower direction until the operation piece 12d thereof becomes engaged with the concave part 5c of the receiver mount 5.

Next, using the fastening member 13, the second divided part 12 is fixed to the first divided part 11. The right-and-left width of the engagement part 4 when fitting the second divided part 12 to the first divided part 11 becomes wider than the opening width of the recess 6 in the supporting post 2 such that the engagement part 4 becomes a no going-off state. After adjusting the support device 1 to a given height by pressing the lever 14 of the fixture means 8, upon releasing the hand from the lever 14, the support device 1 can be fixed to the supporting post 2.

According to the support device 1 of the present embodiment, the following advantageous effects are obtained.

Since the engagement part 4 changes its shape from the insertable state being narrower than the opening width of the recess 6 in the supporting post 2 to the no going-off state being wider than the opening width of the recess 6, the engagement part 4 can be engaged with the recess 6 in the supporting post 2 from the front side of the supporting post 2.

Since the fixture means 8 has the stoppers 15a, 15b each sandwiched between the slant face 18 of the receiver mount 5 and the supporting post 2, heavy objects can become supported by the support device 1.

Since the engagement part 4 has the first divided part 11 integrated with the receiver mount 5 and the second divided part 12 fixed to the first divided part 11, strength of the engagement part 4 can be assured.

Since the first divided part 11 and the second divided part 12 are each formed with the abutting face (lateral face 11c1, 12c1) and the second divided part 12 is prevented from moving backwardly with respect to the first divided part 11, the second divided part 12 can also be pressed to the inner face of the recess 6.

Since the operation piece 12d is disposed to the second divided part 12, the second divided part 12 can be operated from the outside of the supporting post 2.

### (Second Embodiment)

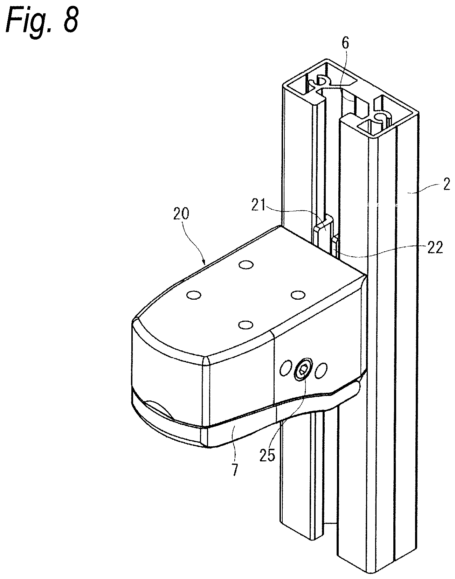

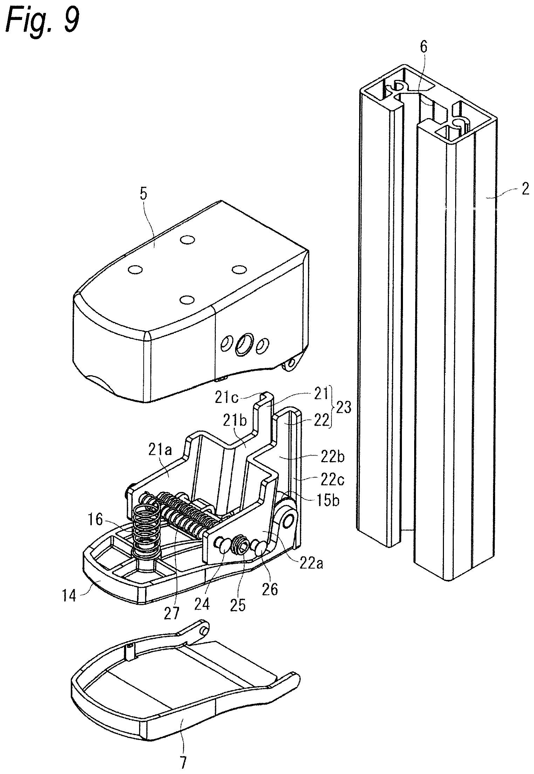

Fig. 8 and Fig. 9 show a support device 20 of a second embodiment of the present invention. The supporting post 2, the receiver mount 5, the fixture means (lever 14, stopper 15a, 15b, spring 16), and the cover 7 have almost similar configurations with the first embodiment and hence, the explanations thereof will be omitted while providing with the same signs. In the second embodiment, the difference is present in the feature that the engagement part 23 is configured from first divided part 21 and a second divided part 22 each of which are closable.

The first divided part 21 and the second divided part 22 are of right-and-left symmetry. The first divided part 21 has a first opposing part 21a having a flat-plate shape while being folded stepwise with wider spacing from the second divided part 22 and a second opposing part 21b having a flat-plate shape with narrower spacing from the second divided part 22. At the top end part of the second opposing part 21b, a fuck 21c folded outwardly as an L-shape is formed. The second divided part 22 also has a first opposing part 22a, a second opposing part 22b and a fuck 22c. Each of the first opposing parts 21a, 22a is approximately parallel each other. Each of the second opposing parts 21b, 22b is approximately parallel each other.

Between the first opposing parts 21a, 22a, a spring 27 is interposed for forcing the spacing between the first divided part 21 and the second divided part 22 wider. The spring 27 is wound about a shaft 24 passing through the first opposing part 21a, 22a. To the second divided part 22, a screw 25 is screwed for preventing the second divided part 22 from becoming closer than a given amount toward the first divided part 21. The first divided part 21 and the second divided part 22 are connected to the receiver mount 5 through a supporting shaft 26 of the shaft 24 and the lever 14.

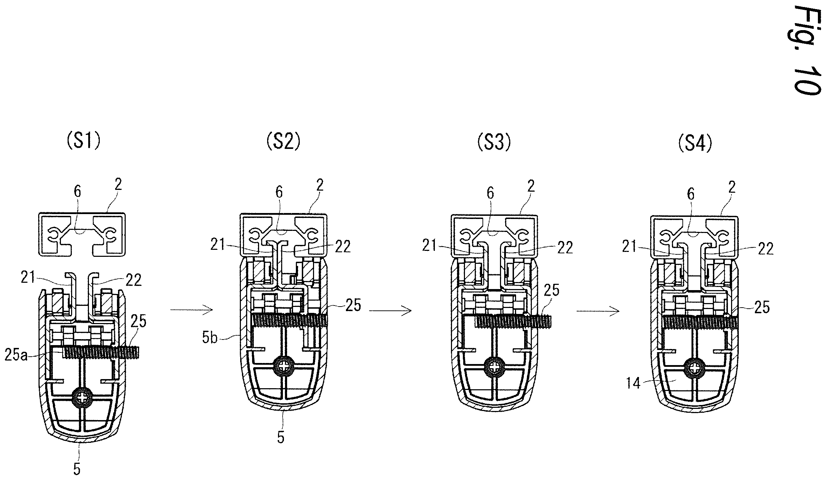

Fig. 10 shows a process chart for illustrating a method for inserting the support device 20 into the recess 6 of the engagement part 23. First, the first divided part 21 and the second divided part 22 are in an opened state due to the spring 27 (not shown) (S1). Next, a screw 25 screwed to the second divided part 22 is loosened such that a head part 25a of the screw 25 becomes apart from the first divided part 21 (S1).

Next, the screw 25 is pushed to the left direction in the figure to close the first divided part 21 and the second divided part 222 (S2). In this stage, the engagement part 23 configured by the first divided part 21 and the second divide part 22 becomes the insertable state. Here, the first divided part 21 is forced to the lateral wall 5b of the receiver mount 5 by the spring 27 such that without changing the position thereof only the second divided part 22 moves to the left direction in the figure (S2).

Next, the engagement part 23 is inserted into the recess 6 of the supporting post 2 (S2), and then the hand is released from the screw 25. Then, the first divided part 21 and the second divided part 22 are opened by the spring 27 (S3). In this stage, the engagement part 23 becomes wider than the opening width of the recess 6 to become the no going-off state.

Next, the screw 25 is screwed until the head 25a of the screw 25 abuts to the first divided part 21 (S4). Thereby, the first divided part 21 and the second divided part 22 can be prevented from closing and the engagement part 23 can also be prevented from going-off from the recess 6 due to erroneous operation. After adjusting the support device 20 to a given height by pushing the lever 14 and releasing the hand from the lever 14, the support device 20 can be fixed to the supporting post 2.

According to the support device 20 of the second embodiment, since the engagement part 23 changes from the insertable state where the engagement part 23 is narrower than the opening width of the recess 6 to the no going-off state where the engagement part 23 is wider than the opening width if recess 6, the engagement part 23 can be fit to the recess 6 in the supporting post 2 from the front side of the supporting post 2.

Now, the present invention must not be limited to the above concrete embodiments and can be realized concretely in various embodiments without departing from the spirit of the present invention.

Although the above first and second embodiments fix the support device to the supporting post by sandwiching the stoppers between the slant face of the receiver mount and the supporting post, the receiver mount can also be fixed to the supporting post by screwing a stopping screw to the receiver mount and pushing the supporting post by this stopping screw.

Although in the above first embodiment, the second divided part is fixed to the first divided part using the fixture member, the second divided part can also be fixed to the first divided part by using an elastically deformable fuck, and the like.

The present description is based on Japanese Patent application No. 2017-118334 filed on 16th day of June, 2017 and the disclosure therein is entirely incorporated herein as reference.

### DESCRIPTION OF SIGNS

- 1···: support device
- 2···: supporting post
- 3···: support device body
- 4···: engagement part
- 5···: receiver mount
- 6···: recess
- 8···: fixture means
- 11···: first divided part
- 11c1···: lateral face (abutting face)
- 12···: second divided part
- 12c1···: lateral face (abutting face)
- 12d···: operation piece
- 13···: fastening means
- 14···: lever
- 15a,15b···: stopper
- 18···: slant face
- 20···: support device
- 21···: first divided part
- 22···: second divided part
- 23···: engagement part

## Claims

1. A support device comprising:
a support device body including an engagement part, the engagement part being fitted slidably into a recess extending to an up-and-down direction of a supporting member, the engagement part being capable of changing from an insertable state being narrower than an opening width of the recess to a no going-off state being wider than the opening width of the recess and a receiver mount protruding from the recess of the supporting member and being slidable along to an up-and-down direction together with the engagement part; and
a fixture means, the fixture means fixing the support device body to the supporting member.

2. The support device of claim 1, wherein the fixture means has a stopper, the stopper being sandwiched between a slant face of the receiver mount, the slant face being slanted to the supporting member and the supporting member.

3. The support device of claim 1 or 2, wherein the engagement part is integrated with the support device body and has a first divided part being narrower than the opening width of the recess and a second divided part being fixed to the first divided part while making a width of the engagement part wider than the opening width of the recess; and
wherein under a condition that the second divided part is fixed to the first divided part, the engagement part is allowed to slide to an up-and-down direction with respect to the supporting member.

4. The support device of claim 3, wherein the first divided part and the second divided part are formed with abutting faces and the abutting faces restrict backward movement of the second divided part with respect to the first divided part when viewed from a front.

5. The support device of claim 3 or 4, wherein the second divided part has an operation piece protruding from the recess of the supporting member and being fixed to the first divided member.
